# EUROPÄISCHE PATENTSCHRIFT

(11) **EP 3 696 328 B1**
(45) Veröffentlichungstag und Bekanntmachung des Hinweises auf die Patenterteilung: **12.01.2022**
(21) Anmeldenummer: 20401006.0
(22) Anmeldetag: 24.01.2020
(51) Int. Cl.: E02D 13/02, E02D 7/02, E02D 7/18, A01M 29/30, A01G 13/10

(54) **VERFAHREN ZUM EINBAU VON VERTIKALEN WÜHLTIERSCHUTZGITTERN**
METHOD FOR INSTALLING VERTICAL GRIDS AGAINST BURROWING ANIMALS
PROCÉDÉ D'INSTALLATION D'UNE GRILLE DE PROTECTION CONTRE LES TAUPES

(30) Priorität: 14.02.2019 DE 102019001147
(43) Veröffentlichungstag der Anmeldung: 19.08.2020
(73) Patentinhaber: Ingenieur Wasser und Tiefbau GmbH Frankfurt (Oder), 15234 Frankfurt (Oder) (DE)
(72) Erfinder: Hein, Christian, 03172 Guben (DE)
(74) Vertreter: Rumrich, Gabriele

(56) Entgegenhaltungen:
- GB-A- 2 463 273
- JP-A- S5 045 404
- KR-B1- 101 068 147
- US-B1- 8 272 624

## Beschreibung

Die Erfindung betrifft ein Verfahren zum Einbau von vertikalen Wühltierschutzgittern und findet insbesondere für Uferbefestigungen und Böschungen als Schutz vor Beschädigungen durch Wühltiere Anwendung.

Durch die Wiederverbreitung des Bibers in Mitteleuropa sind umfangreiche Maßnahmen notwendig, um Erddämme, Straßen und Uferbereiche zu schützen. Dafür werden Biberschutzgitter auf Böschungen aufgelegt und im Fußbereich (Anschluss an das Gewässer) möglichst tief eingebaut (siehe hierzu auch die Merkblätter 247/1997 des DVWK).

Der Einbau von Wühltierschutzgittern erfolgt überall dort, wo z.B. durch Biber oder andere Wühltiere, Uferbefestigungen oder Böschungen vor Schäden geschützt werden müssen. Die Fußsicherung dieser Erdbauwerke erfolgte bisher durch den vertikalen Einbau von Schutzgittern in einem temporären offenen Graben. Dafür sind entsprechend aufwendige Verbau-, Erd-, und Wasserhaltungsarbeiten notwendig, beziehungsweise werden kostenintensive Stahlspundwände eingebaut.

Aus der Druckschrift DE 20 2015 105 518 U1 ist eine Tierabwehreinrichtung beschrieben, bestehend aus einem an einer Böschung eines Wasser enthaltenden Beckens oder eines Wasser führenden Kanals anordenbaren bzw. angeordneten Metallgitter, aus einer Verankerungseinrichtung sowie aus einem Mittel, um eine Anhebung des Metallgitters von der Böschung zu unterbinden. Die Verankerungseinrichtung verhindert eine nach unten gerichtete Bewegung des Metallgitters. Derartige Schutzgitter können problemlos von den abzuwehrenden Tieren untergraben werden.

Die Druckschrift DE 94 18 197 U1 beschreibt eine Gartenbeeteinfassung aus Kunststoffplatten zum Schutz vor Wühlmäusen und Schnecken. Es werden zusammensteckbare Kunststoffplatten beschrieben, die in gezogene Kunststoffpfosten steckbar sind. Die Zusatzgitter sind in verschiedenen Längen ausgebildet. Als Gartenbeeteinfassung werden Pfosten, Platte, und bei Bedarf Gitter eingegraben. Durch die Einfassung entsteht ein natürliches Hindernis für Wühlmäuse, für eine Uferbefestigung gegen größere Nagetiere ist diese Vorrichtung jedoch nicht geeignet.

Die KR 101 068 147 B1 beschreibt das Einbringen von Spundwandprofilen in den Boden mittels einer Ramme. Dabei wird zur Verstärkung des Spundwandprofiles ein oben U-förmig gebogenes "Formblech" verwendet, welches zusätzlich mit unteren hakenförmigen Profilen in korrespondierende Ausnehmungen des Spundwandprofiles eingreift.

Ähnlich wird bei JP S 50 45404 A eine Spundwand mittels einer Trägerkonstruktion als Führung in den Boden eingeschlagen, wobei hier eine "Kopfverstärkung an der Oberseite vorgesehen ist.

Bei beiden vorgenannten Varianten besteht die Gefahr, dass ein anstelle einer Spundwand in den Boden einzubringendes Blech, dieses bei Auftreffen auf Steine unerwünscht deformiert wird.

Die US 8 272 624 B1 betrifft ein Unkrautsperrsystem, welches mit einem Zaun in Eingriff steht. Diese Lösung umfasst einen herkömmlichen Zaun, der in einer Bodenoberfläche montiert ist und sich von dieser nach oben erstreckt. Unter dem Zaun sind u-förmige Barrieren vorgesehen, die die Unterseite des Zauns aufnehmen und mit einem senkrechten Bereich in den Boden eingebracht sind, um ein Wachstum von Unkraut unter dem Zaunabschnitt 12 zu verhindern.

Diese Lösung ist nicht zum Einbringen von Gittern in den Boden geeignet und auch nicht dafür vorgesehen.

In der Druckschrift DE 299 09 450 U1 wird die Herstellung eines geschlossenen Schutzkorbes in verschiedenen Größen aus Drahtgeflecht beschrieben, wobei der Schutzkorb das Eindringen von Nagetieren in das Wurzelwerk von Bäumen, Sträuchern und Stauden und deren Verbissschäden verhindert. Auch dieser Schutzkorb ist für den Schutz von Uferbefestigungen nicht geeignet.

Aufgabe der Erfindung ist es, ein Verfahren zum Einbau von vertikalen Wühltierschutzgittern zu entwickeln, die einen einfachen konstruktiven Aufbau aufweist und einen Schutz von Uferbefestigungen und Böschungen vor Wühltieren wie Biber, Bisamratten und anderen Schadtieren leicht und wirtschaftlich gewährleistet.

Diese Aufgabe wird mit den kennzeichnenden Merkmalen des ersten Patentanspruchs gelöst.

Vorteilhafte Ausgestaltungen ergeben sich aus den Unteransprüchen.

Die Vorrichtung für das Verfahren besteht aus zwei miteinander gekoppelten Formblechen, die Schutzgitter oder Matten mit einer Breite von 1,00 m bis 4,00 m bei einer Länge bis zu 6,00 m aufnehmen können. Die beiden Formbleche bilden die Schutzhülle für das Gitter um Schäden beim Einbau zu vermeiden. Die beiden Formbleche (Träger und Deckel) werden unten mittels einer Hakenverbindung und oben durch eine Bolzenverbindung zusammengefügt. Dadurch lassen sich die Bleche nach dem Einbau in den zu schützenden Bodenbereich voneinander lösen und können einzeln wieder gezogen und weiterverwendet werden.

An dem Trägerblech befindet sich die Aufnahme / Befestigung für das einzubauende Schutzgitter.

An dem anderen Formblech (Deckel) befindet sich ein verstärktes Blech zur Aufnahme für die Klemmbacken eines konventionellen Spundwandrüttlers oder Ramme.

Durch wenigstens ein eingelegtes Führungsblech in die Vorrichtung wird die gewünschte Überlappung / Überschneidung des Schutzgitters sichergestellt, so dass eine geschlossene unterirdische Schutzbarriere entsteht.

Das Führungsblech wird auf das Trägerblech aufgelegt. In einer alternativen Ausgestaltung können durch eine seitliche und obere Schiene die Führungsbleche gegen Verrutschen einfach gesichert sein. Das als Rolle oder vorkonfektionierte Matte gelieferte Schutzgitter wird an den Haken des Trägerbleches befestigt.

Mittels Winkelschleifer oder Drahtschneider kann das oben über die Trägertafel hinausstehende Schutzgitter abgetrennt werden.

Nunmehr wird die zweite Blechtafel als Deckel so auf das Trägerblech aufgelegt, dass diese unten durch einfaches Einhaken miteinander verbunden sind. Oben wird mittels Bolzen eine kraftschlüssige Verbindung zwischen den beiden Formblechen (Träger und Deckel) hergestellt. Das Schutzgitter befindet sich jetzt zwischen den beiden Blechen. Die Vorrichtung wird nunmehr so aufgerichtet, dass diese mittels eines Spundwandrüttlers oder Ramme aufgenommen werden kann (Klemmbereich an dem Deckelblech).

Die Vorrichtung mit dem Schutzgitter wird mittels eines herkömmlichen Spundwandrüttlers oder Ramme in die vorgesehene Bauwerksachse eingebaut.

Nunmehr werden die oberen Bolzen gelöst und die beiden Formbleche werden einzeln gezogen.

Dabei verbleiben das Schutzgitter und das Führungsblech im Boden.

Der Einbau des nächsten Segmentes erfolgt wie vor beschrieben, jedoch wird die Vorrichtung an dem im Boden verbliebenen Führungsblech angedrückt und abgeteuft. Damit ist die gewünschte enganliegende Überlappung des Stoßbereiches gewährleistet. Die Führungsschiene aus dem ersten Vorgang kann jetzt gezogen werden und für den nächsten Arbeitsgang wiederverwendet werden.

Der Stoßbereich kann zusätzlich mittels einer Randverstärkung gesichert werden, so dass ein Auseinanderhebeln vermieden wird. Dies ist insbesondere bei Biberschutzmaßnahmen erforderlich.

Somit kann eine geschlossene unterirdische Barriere hergestellt werden.

Mit der Vorrichtung und dem erfindungsgemäßen Verfahren lassen sich die Schutzgitter in verschiedenen Abmessungen und Typen in geschlossener Bauweise vertikal in die zu sichernden Bodenbereiche einbauen. Die aufwendigen Vorarbeiten können damit entfallen. Damit ist der Schutz vor Wühltieren wie Biber, Bisamratten und anderen Schadtieren leicht und wirtschaftlich herzustellen.

Die Erfindung wird nachfolgend mittels Zeichnungen dargestellt.

Es zeigen:
- Figur 1: ein erstes Formblech in Form des Trägers,
- Figur 2: eine Darstellung der Vorrichtung in einer Vorder- und Seitenansicht,
- Figur 3: eine Seitenansicht der Führungsbleche,
- Figur 4: eine Draufsicht auf ein mittels der Vorrichtung eingebrachtes Schutzgitter,
- Figur 5: eine schematische Darstellung des Verfahrens an einer Straßenbefestigung.

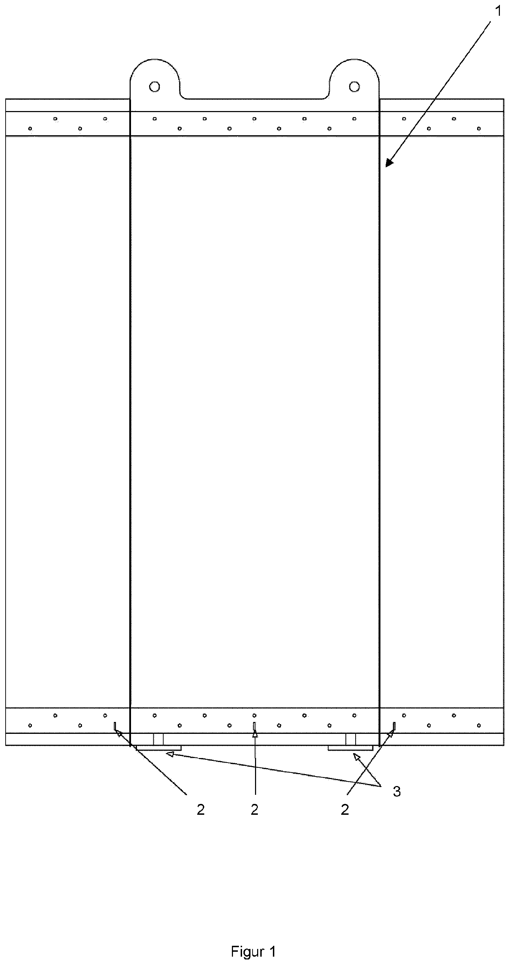

Figur 1 zeigt ein erstes Formblech 1 in Form des Trägers, wobei das erste Formblech 1 Zähne 2 zum Halten des Gitters aufweist. Des Weiteren ist am unteren Ende eine Konsole 3 mit Hakenlaschen angeordnet.

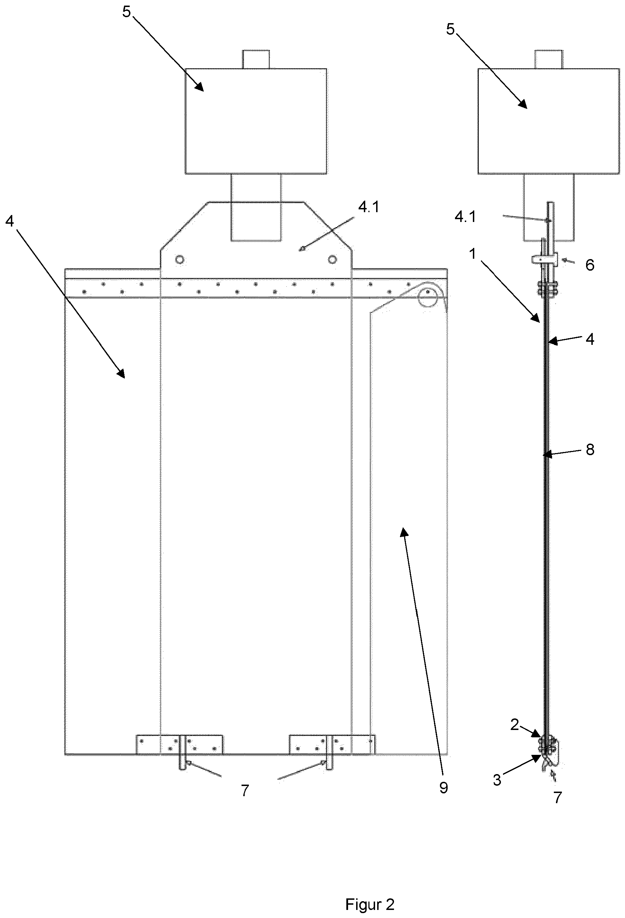

In Figur 2 wird eine Vorrichtung in einer Vorder- und Seitenansicht dargestellt. Das zweite Formblech 4 ist in Form des Deckels ausgebildet und weist ein verstärktes Blech 4.1 zur Aufnahme für die Klemmbacken eines konventionellen Spundwandrüttlers 5 oder einer Ramme 5 auf.

Das erste und zweite Formblech 1, 4 sind mittels Halteelementen an einem oberen Ende und einem unteren Ende miteinander verbunden derart, dass das obere Halteelement in Form von Bolzen 6 und das untere Halteelement in Form einer Hakenverbindung mit Haken 7 ausgebildet ist. Zwischen dem ersten und zweiten Formblech 1, 4 ist das Gitter 8 angeordnet.

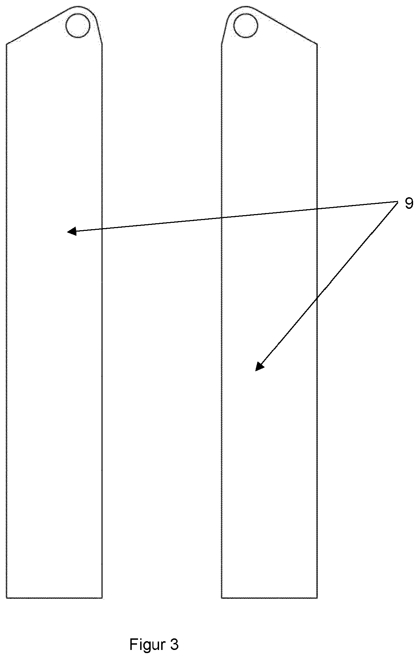

Die Vorrichtung weist ein, auf dem ersten Formblech 1 aufgelegtes Führungsblech 9 auf, das durch einfaches Einklemmen zwischen dem Formblech 1 und 4 gegen Verrutschen einfach gesichert sind. Ein Führungsblech 9 ist in einer ersten und zweiten Seitenansicht in Figur 3 dargestellt.

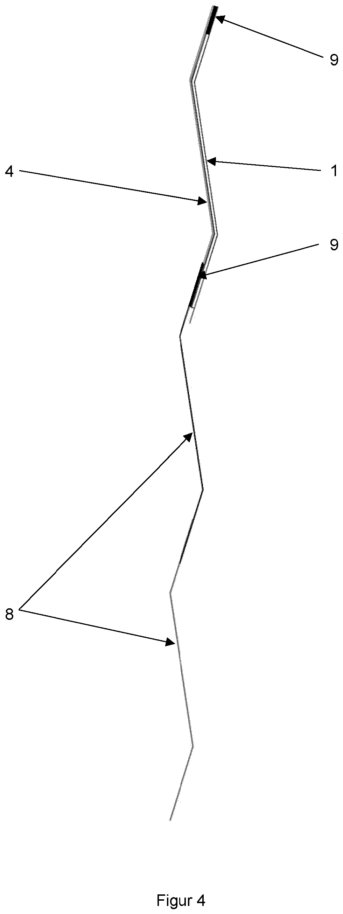

Figur 4 zeigt die Anordnung des Schutzgitters in einer Draufsicht. Die Gitter 8 weisen eine Breite von 1,5 bis 4m auf und werden vorzugsweise mit einer Überlappung am Stoß von 0 - 50 cm je nach Anforderung angeordnet. Im oberen Bereich der Figur ist die Vorrichtung mit eingelegtem Gitter und Führungsblech dargestellt, wobei die Vorrichtung an dem Führungsblech angedrückt wurde.

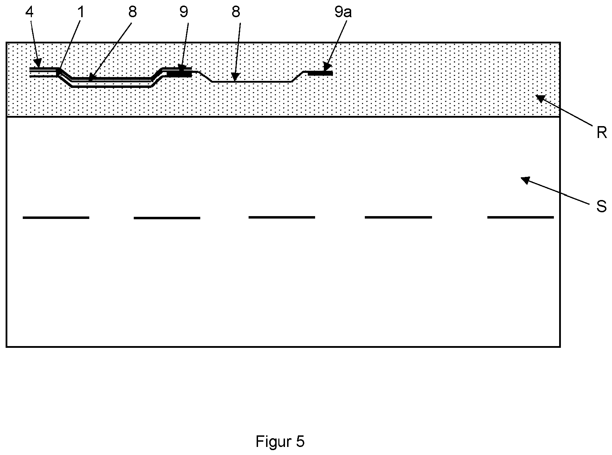

In Figur 5 ist eine schematische Darstellung einer Straßenbefestigung dargestellt. Das Gitter 8 wird in einem Randbereich R einer Straße S montiert. Das Verfahren kann in drei Verfahrensschritte nach dem ersten Einsetzen eines Gitters unterteilt werden. In einem ersten Verfahrensschritt nach dem Einbau der Vorrichtung, bestehend aus dem ersten und zweiten Formblech 1, 4, wird diese aus dem Erdreich gezogen, es verbleibt das Gitter 8 und ein Führungsblech 9 im Boden.

Im nächsten Schritt wird die Vorrichtung erneut mit einem Gitter 8 und einem weiteren Führungsblech 9a bestückt. Es folgt der Einbau, wobei das im Boden verbliebene Führungsblech 9 als Führung verwendet wird.

Im dritten Schritt wird die Vorrichtung und das erste Führungsblech 9 aus dem Boden gezogen und folgend mit einem weiteren Gitter 8 und dem gezogenen Führungsblech 9 bestückt. Diese Schritte wiederholen sich, bis der Randbereich R entsprechend der geforderten Länge gesichert ist.

Mit der Vorrichtung und dem erfindungsgemäßen Verfahren lassen sich vertikale Schutzgitter an Uferböschungen, Erddämme und anderen zu schützenden Erdbauwerken wirtschaftlich auch in größeren Tiefen einbauen. Baugrundrisiken wie Fließsande und hohe Grundwasserstände usw. können damit vermieden werden. Mit dieser Technologie können aufwendige Verfahren, wie Spundwände, offene Gräben mit Wasserhaltung usw. ersetzt werden.

### Bezugszeichenliste

- 1: erstes Formblech
- 2: Zähne
- 3: Konsole
- 4: Zweites Formblech
- 4.1: verstärktes Blech
- 5: Ramme/Spundwandrüttler
- 6: Bolzen
- 7: Haken
- 8: Gitter
- 9: Führungsblech
- 9a: Zweites Führungsblech
- R: Randbereich
- S: Straße

## Patentansprüche

1. Verfahren zum Einbau von vertikalen Wühltierschutzgittern in den Boden, **dadurch gekennzeichnet, dass** ein Gitter (8) in einer Vorrichtung zwischen einem ersten Formblech (1) in Form eines Trägers und einem zweiten Formblech (4) in Form eines Deckels mittels einer Verbindung des ersten und zweiten Formbleches (1, 4) fixiert und in eine Bauwerksachse in den Boden eingebaut wird und dass die Verbindung nach dem Einbau getrennt wird und die Formbleche (1, 4) einzeln aus dem Boden herausgezogen werden, so dass das Gitter (8) im Boden verbleibt.

2. Verfahren nach Anspruch 1, **dadurch gekennzeichnet, dass** zwischen dem ersten Formblech (1) und dem zweiten Formblech (4) zwei Führungsbleche (9) angeordnet sind, die beim Herausziehen der beiden Formbleche mit dem Gitter (8) im Boden verbleiben.

3. Verfahren nach Anspruch 1 oder 2, **dadurch gekennzeichnet, dass** ein nächstes Segment des Gitters (8) und ein zweites Führungsblech (9a) zwischen dem ersten und zweiten Formblech (1, 4) eingelegt und fixiert wird und dass die Vorrichtung an dem im Boden verbliebenen ersten Führungsbleche (9) angedrückt wird derart, dass eine Überlappung des Stoßbereichs des Gitters (8) erzeugt wird und dass im Folgenden die erste und zweite Führungsschiene und das erste und zweite Formblech (1, 4) aus dem Boden entfernt werden.

4. Verfahren nach einem der Ansprüche 1 bis 3, **dadurch gekennzeichnet, dass** der Einbau der Formbleche (1, 4) mit dem Gitter (8) mittels eines Spundwandrüttlers (5) oder einer Ramme (5) erfolgt.

5. Verfahren nach einem der Ansprüche 1 bis 4, **dadurch gekennzeichnet, dass** der Stoßbereich eines ersten und zweiten Gitters (8) zusätzlich mittels einer Randverstärkung gesichert wird, so dass ein Auseinanderhebeln vermieden wird.

## Claims

1. Method for the installation of vertical grids against burrowing animals in the ground, **characterized in that** a grid (8) is fixed in a device between a first shaped plate (1) in the form of a support and a second shaped plate (4) in the form of a cover by means of a connection of the first and second shaped plate (1, 4) and is installed in the ground along a construction axis, and **in that** the connection is disconnected after installation and the shaped plates (1, 4) are pulled out of the ground individually so that the grid (8) remains in the ground.

2. Method according to claim 1, **characterized in that** two guide plates (9) are arranged between the first shaped plate (1) and the second shaped plate (4), which guide plates (9) remain in the ground when the two shaped plates with the grid (8) are pulled out.

3. Method according to claim 1 or 2, **characterized in that** a next segment of the grid (8) and a second guide plate (9a) is inserted and fixed between the first and second shaped plate (1, 4), and **in that** the device is pressed against the first guide plate (9) remaining in the ground in such a way that an overlap of the joint area of the grid (8) is produced and **in that** subsequently the first and second guide rail and the first and second shaped plate (1, 4) are removed from the ground.

4. Method according to one of claims 1 to 3, **characterized in that** the installation of the shaped plates (1, 4) with the grid (8) is carried out by means of a sheet pile vibrator (5) or a pile driver (5).

5. Method according to one of claims 1 to 4, **characterized in that** the joint area of a first and second grid (8) is additionally secured by means of an edge reinforcement so that levering apart is prevented.

## Revendications

1. Procédé pour l'installation dans le sol de grillages verticaux de protection contre les animaux fouisseurs, **caractérisé en ce qu'**un grillage (8) est fixé dans un dispositif entre une première tôle mise en forme (1) formant un support et une deuxième tôle mise en forme (4) formant un couvercle au moyen d'un assemblage de la première tôle mise en forme avec la deuxième (1, 4) et introduit dans le sol dans l'axe d'un ouvrage de construction et **en ce que** l'assemblage est défait après l'installation et les tôles mises en forme (1, 4) sont retirées une par une du sol, de sorte que le grillage (8) reste dans le sol.

2. Procédé selon la revendication 1, **caractérisé en ce que** sont disposées entre la première tôle mise en forme (1) et la deuxième tôle mise en forme (4) deux tôles de guidage (9) qui restent dans le sol avec le grillage (8) lors du retrait des deux tôles mises en forme.

3. Procédé selon la revendication 1 ou 2, **caractérisé en ce qu'**un segment suivant du grillage (8) et une deuxième tôle de guidage (9a) sont insérés et fixés entre la première tôle mise en forme et la deuxième (1, 4) et **en ce que** le dispositif est pressé sur les premières tôles de guidage (9) restées dans le sol, de façon à créer un chevauchement des zones mises bout à bout du grillage (8), et **en ce que** le premier rail de guidage et le deuxième et la première tôle mise en forme et la deuxième (1, 4) sont ensuite retirés du sol.

4. Procédé selon l'une des revendications 1 à 3, **caractérisé en ce que** l'installation des tôles mises en forme (1, 4) avec le grillage (8) est effectuée au moyen d'un vibrofonceur (5) ou d'une batteuse de palplanches (5).

5. Procédé selon l'une des revendications 1 à 4, **caractérisé en ce que** la zone mise bout à bout d'un premier grillage et d'un deuxième (8) est en outre consolidée au moyen d'un renfort des bords afin d'éviter qu'elle puisse être soulevée et écartée.
